# FASCICULE DE BREVET EUROPEEN

(11) **EP 2 788 636 B1**
(45) Date de publication et mention de la délivrance du brevet: **06.04.2016**
(21) Numéro de dépôt: 12801521.1
(22) Date de dépôt: 03.12.2012
(51) Int. Cl.: F16H 25/22, F16H 57/04, F16C 33/10

(54) **ORGANE MECANIQUE**
MECHANISCHES ELEMENT
MECHANICAL MEMBER

(30) Priorité: 06.12.2011 FR 1161239
(43) Date de publication de la demande: 15.10.2014
(73) Titulaire: SAGEM DEFENSE SECURITE, 92100 Boulogne Billancourt (FR)
(72) Inventeur: RAFAITIN, Julie, F-92100 Boulogne-Billancourt (FR); MERLET, Etienne, F-92100 Boulogne-Billancourt (FR)
(74) Mandataire: Lavialle, Bruno François Stéphane
(86) Numéro de dépôt international: PCT/EP2012/074280
(87) Numéro de publication internationale: WO 2013/083531

(56) Documents cités:
- FR-A1- 2 925 640

## Description

L'invention concerne un organe mécanique comportant une première pièce en contact avec une deuxième pièce mobile relativement à la première pièce. L'invention concerne ainsi, par exemple, les vis à rouleaux satellites et les roulements à rouleaux satellites et se destine notamment, bien que non exclusivement, à de tels organes mécaniques qui sont soumis, en service, à de fortes charges axiales et à des déplacements réduits et/ou lents.

### ARRIERE PLAN TECHNOLOGIQUE DE L'INVENTION

Pour les organes mécaniques que sont les vis et roulements à rouleaux satellites, il est connu du document FR 2 925 640 d'avoir recours à un lubrifiant liquide, de préférence une huile à additif dilué, propre à être distribué par capillarité entre la vis, les rouleaux satellites et l'écrou pour lubrifier ces éléments.

Les vis et roulements à rouleaux satellites sont parfois utilisées pour des applications dans lesquelles elles sont soumises, en service, à de fortes charges axiales et à des déplacements réduits et/ou lents. C'est par exemple le cas lorsqu'une vis ou un roulement à rouleaux satellites actionne un élément mobile d'un aéronef comme une gouverne.

Or, il s'avère que les lubrifiants liquides ne sont que peu ou pas efficaces en présence de fortes charges axiales et en particulier en cas de déplacements réduits et/ou lents de la vis ou du roulement à rouleaux satellites. En effet, il est extrêmement difficile dans ces conditions d'obtenir un film d'huile homogène entre les rouleaux satellites et la vis ou l'écrou de la vis ou entre les rouleaux et les bagues du roulement à rouleaux satellites, ce qui nuit grandement au fonctionnement de la vis ou du roulement à rouleaux satellites. Cet inconvénient est encore augmenté lorsque le lubrifiant liquide a une faible viscosité.

Il a été également proposé d'assurer la lubrification d'une telle vis ou d'un tel roulement à rouleaux satellites au moyen d'une graisse. En effet, la graisse supporte des charges axiales plus élevées et est bien adaptée aux déplacements plus réduits et/ou plus lents. En revanche, ces performances ne sont pas toujours maintenues suffisamment longtemps sans maintenance pour certaines applications particulières comme des applications dans le domaine aéronautique.

En outre, la graisse présente de nombreux autres inconvénients et notamment le fait d'avoir une viscosité qui évolue fortement avec la température. Ainsi, à une température voisine de - 30 degrés Celsius, la plupart des graisses ont tendance à se figer, ce qui ralentit ou empêche la rotation des rouleaux satellites. Or, dans le cas où une vis ou un roulement à rouleaux satellites est embarqué sur un aéronef pour en actionner par exemple une gouverne, la vis ou le roulement à rouleaux satellites subit des températures basses de l'ordre de - 50 degrés Celsius en moyenne. La lubrification par graisse n'est donc pas adaptée à une telle application.

Par ailleurs, la graisse a tendance à être expulsée vers l'extérieur des différentes zones de contact entre les rouleaux satellites et la vis ou l'écrou ou entre les rouleaux et les bagues du roulement. Il faut alors régulièrement recharger en graisse la vis ou le roulement à rouleaux satellites pour limiter ce phénomène.

Il existe par ailleurs des lubrifiants solides. Il a alors été envisagé d'avoir recours à une lubrification solide dite sèche qui consiste à recouvrir des parties de l'organe mécanique, comme la vis et l'écrou et/ou les rouleaux satellites, d'un revêtement lubrifiant solide. Selon un premier mode de réalisation, des particules de lubrifiant solides sont intégrées à la vis et l'écrou et/ou aux rouleaux satellites de sorte que ces particules soient libérées progressivement par leurs usures. Le revêtement comporte par exemple du bisulfure de molybdène (ou MoS₂). Selon un deuxième mode de réalisation, le revêtement lubrifiant est déposé à la surface de la vis et de l'écrou ou des rouleaux satellites. Le revêtement comporte par exemple du bisulfure de tungstène (ou WS₂).

Bien que les lubrifiants solides supportent des charges axiales plus élevées associées à des déplacements plus réduits et/ou plus lents qu'un lubrifiant liquide, ils présentent l'inconvénient d'être extrêmement sensibles aux conditions climatiques, thermiques et/ou chimiques que l'on peut rencontrer dans de nombreux domaines industriels comme le domaine aéronautique par exemple.

En particulier, les lubrifiants solides ont tendance à se dégrader en présence d'eau perdant ainsi toute efficacité. L'eau rend même parfois les lubrifiants solides agressifs pour les surfaces sur lesquelles les lubrifiants solides sont agencés. Avec certains revêtements, comme par exemple ceux en MoS₂ ou du WS₂, cette dégradation engendre la formation de deux composants agressifs, à savoir un oxyde abrasif et de l'acide sulfurique.

En outre, un composé chimique gazeux peut s'infiltrer dans la vis ou le roulement à rouleaux satellites et se condenser à l'intérieur même de ladite vis sous une forme liquide qui est susceptible de réagir avec le lubrifiant solide. De façon générale, les composés chimiques peuvent altérer n'importe quel lubrifiant mais altèrent bien plus violemment les lubrifiants solides. Ainsi, la seule présence d'un composé chimique gazeux peut suffire à dégrader le lubrifiant solide en particulier au niveau des zones de contact de la vis ou du roulement à rouleaux satellites, les frottements au niveau de ces zones amplifiant la réactivité du composé chimique gazeux.

La sensibilité des lubrifiants solides aux conditions thermiques, climatiques et/ou chimiques peut donc avoir de graves conséquences sur le fonctionnement de la vis ou du roulement à rouleaux satellites de sorte qu'il s'avère difficile d'avoir recours à de tels lubrifiants pour certaines applications comme le domaine aéronautique.

### OBJET DE L'INVENTION

L'objectif de l'invention est de proposer un organe mécanique dont la lubrification est améliorée par rapport aux solutions de l'art antérieur.

### BREVE DESCRIPTION DE L'INVENTION

A cet effet, on propose un organe mécanique comportant une première pièce en contact avec une deuxième pièce mobile relativement à la première pièce, au moins l'une des pièces comportant un revêtement de lubrifiant solide au moins au niveau des zones de contact entre la première pièce et la deuxième pièce, le lubrifiant solide étant apte à assurer seul la lubrification de l'organe mécanique

Selon l'invention, l'organe mécanique comporte des moyens de rétention et de distribution capillaire d'un fluide entre les pièces de manière à former un film entre lesdites pièces qui puisse être temporairement percé au niveau de chaque zone de contact.

Le film de fluide protège le lubrifiant solide des attaques extérieures sans être utilisé pour assurer lui-même une fonction de lubrification de l'organe mécanique. Le film est donc percé temporairement pour un contact direct entre les pièces sur chaque zone de contact, de dimensions très limitées, entre les pièces.

Au niveau d'une zone de contact, une surface de la première pièce est en contact avec une surface de la deuxième pièce. Or lesdites surfaces présentent naturellement des défauts ou des irrégularités de sorte que le contact entre les surfaces ne peut être parfait. La zone de contact n'est donc pas formée par un contact parfaitement linéaire entre les deux surfaces mais par une multitude de points de contact entre les deux surfaces, ce qui permet au film de se reformer très rapidement et aisément une fois que le contact cesse entre les deux surfaces.

Selon un mode de réalisation privilégié, l'organe mécanique comporte un premier élément, un deuxième élément entourant coaxialement le premier élément, et une pluralité de corps roulants répartis circonférentiellement entre une surface extérieure du premier élément et une surface intérieure du deuxième élément pour coopérer avec lesdites surfaces, au moins la surface intérieure et la surface extérieure ou au moins les corps roulants comportant un revêtement du lubrifiant solide au moins au niveau des zones de contact de chaque corps roulant avec la surface extérieure du premier élément et la surface intérieure du deuxième élément, les moyens de rétention et de distribution capillaire du fluide étant agencés de manière à former, entre les corps roulants et chaque surface, un film qui puisse être temporairement percé au niveau de chaque zone de contact de chaque corps roulant avec ladite surface.

Dans ce mode de réalisation, le corps roulant et l'un des éléments forment les premières et deuxièmes pièces mentionnées plus haut.

Le film de fluide protège le lubrifiant solide des attaques extérieures sans être utilisé pour assurer lui-même une fonction de lubrification de l'organe mécanique. Le film est donc percé temporairement pour un contact direct entre les corps roulants et le premier élément ou le deuxième élément sur chaque zone de contact très limitée entre un corps roulant et le premier élément ou entre un corps roulant et le deuxième élément. Le lubrifiant solide ainsi découvert au niveau de la zone de contact assure la lubrification et le fluide forme autour de la zone de contact un ménisque capillaire assurant qu'en-dehors de la zone de contact l'intégrité du film est maintenue pour protéger le lubrifiant solide.

Par ailleurs, comme le fluide ne participe pas à la lubrification, il ne travaille pas d'un point de vue mécanique de sorte que sa consommation est extrêmement réduite. Ainsi, une faible quantité initiale de fluide suffit pour la durée de vie de l'organe mécanique. Il en résulte que les moyens de rétention et de distribution capillaire sont de faible volume et n'ont donc que peu d'impact en volume, mais aussi en masse, sur l'organe mécanique. En outre, ne travaillant pas d'un point de vue mécanique, le fluide peut ainsi être exempt d'additif solide pour le travail en très haute pression et le fluide peut être extrêmement peu visqueux. Le fluide peut donc être aisément distribué par capillarité dans l'organe mécanique.

De façon avantageuse, il n'est pas nécessaire d'assurer une étanchéité de l'organe mécanique puisque le film de fluide est maintenu en place par capillarité. La répartition des corps roulants sur toute la surface extérieure du premier élément et du deuxième élément participe également au maintien du film de fluide en place.

De plus, la distribution du fluide par capillarité à partir de moyens de rétention et de distribution permet d'assurer que le film de fluide est toujours présent entre les corps roulants et le premier élément et le deuxième élément, en particulier au niveau des zones de contact. En outre, il n'est pas nécessaire non plus d'assurer une herméticité de l'organe mécanique, le film de fluide protégeant lui-même les corps roulants, le premier élément et le deuxième élément d'attaques extérieures comme l'humidité ou autre.

L'organe mécanique de l'invention a ainsi une robustesse et une fiabilité importante sans nécessiter beaucoup de maintenance.

Un autre avantage est que le fluide permet d'amortir des micro-vibrations que subissent les corps roulants, le premier élément et le deuxième élément notamment au niveau des zones de contact.

Par ailleurs, bien que le film soit de faible épaisseur, le fluide limite les contraintes thermiques au niveau des zones de contact et notamment un échauffement des corps roulants, de la surface interne et de la surface externe au niveau des zones de contact.

De façon remarquable, le fluide permet également de participer à un maintien en place du revêtement de lubrifiant solide sur les corps roulants ou la surface externe et la surface interne.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins ci-joints, parmi lesquels :
- la figure 1 est une vue en perspective, avec écorché, d'une vis à rouleaux satellites selon l'invention;
- la figure 2 est une vue schématique en coupe transversale de la vis à rouleaux satellites illustrée à la figure 1 selon un mode de réalisation particulier de l'invention ;
- la figure 3 est une vue schématique en coupe longitudinale d'un rouleau satellite de la vis à rouleaux satellites illustrée à la figure 1 selon un mode particulier de réalisation de l'invention ;
- la figure 4 est une vue schématique en coupe longitudinale de la vis à rouleaux satellites illustrée à la figure 1 selon un autre mode de réalisation particulier de l'invention ;
- la figure 5 est une vue schématique en coupe transversale de la vis à rouleaux satellites illustrée à la figure 1 selon un autre mode particulier de réalisation de l'invention.

### DESCRIPTION DETAILLEE DE L'INVENTION

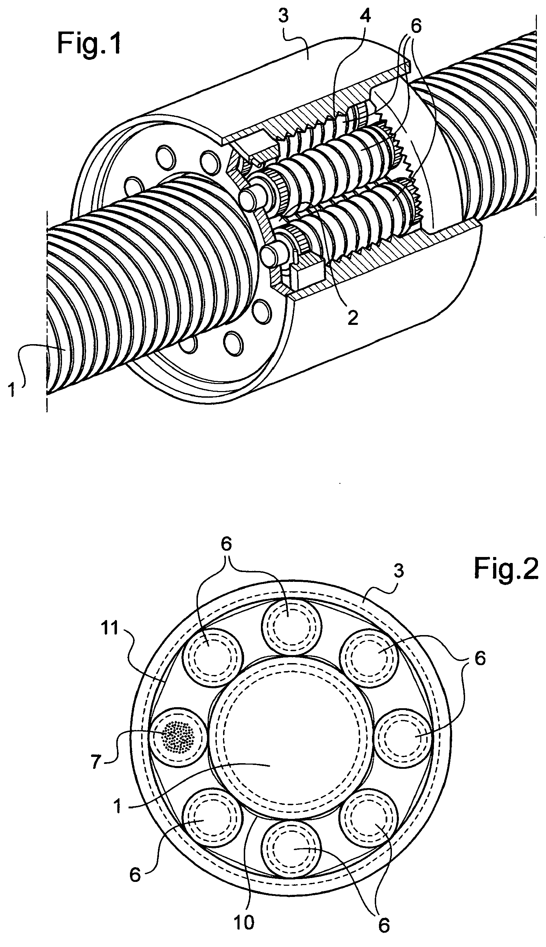

En référence aux figures 1 et 2, l'organe mécanique selon l'invention est ici une vis à rouleaux satellites qui comporte une vis 1 comprenant une surface extérieure 2 filetée et un écrou 3 entourant coaxialement la vis 1 et comprenant une surface intérieure 4 taraudée, l'écrou 3 étant engagé sur la vis 1.

Un logement cylindrique est ménagé dans l'écrou 3 et reçoit une pluralité de rouleaux satellites 6 filetés répartis circonférentiellement entre la surface extérieure 2 et la surface intérieure 4 pour coopérer avec elles, les filets de la surface extérieure 2, de la surface intérieure 4 et des rouleaux satellites 6 ont le même pas. Les rouleaux satellites 6 comportent en outre des extrémités dentées engrenant avec des couronnes dentées de l'écrou 3 afin de synchroniser les rouleaux satellites 6.

La structure décrite ci-dessus et le fonctionnement de la vis à rouleaux satellites dans son principe sont connus en eux-mêmes et ne seront pas décrits plus en détail ici.

Au moins la surface intérieure 4 et la surface extérieure 2 ou au moins les corps roulants 6 comportent un revêtement de lubrifiant solide au moins au niveau des zones de contact de chaque corps roulant 6 avec la surface extérieure 2 et la surface intérieure 4, le lubrifiant solide étant apte à assurer seul la lubrification de l'organe mécanique. Selon un mode de réalisation privilégiée, la surface intérieure 4, la surface extérieure 2 et les corps roulants 6 comportent un revêtement de lubrifiant solide comme illustré en pointillés à la figure 2.

De préférence, le revêtement de lubrifiant solide comprend des particules de lubrifiant solide qui ont été déposées à la surface de la vis 1, de l'écrou 3 et des rouleaux satellites 6 pour revêtir cette surface sans être incorporées dans la couche superficielle de la vis 1, de l'écrou 3 et des rouleaux satellites 6. Le revêtement de lubrifiant solide comporte par exemple du bisulfure de tungstène ou (WS₂).

Selon l'invention, la vis à rouleaux satellites comporte des moyens de rétention et de distribution capillaire d'un fluide (schématisés par des points à la figure 2) pour distribuer le fluide entre les rouleaux satellites 6 et la surface intérieure 4 d'une part et entre les rouleaux satellites 6 et la surface extérieure 2 d'autre part de manière à former, entre les rouleaux satellites 6 et la surface extérieure 2, un premier film 10 qui puisse être temporairement percé au niveau de chaque zone de contact de chaque rouleau 6 avec la surface extérieure 2 et de manière à former, entre les rouleaux satellites 6 et la surface intérieure 4, un deuxième film 11 qui puisse être temporairement percé au niveau de chaque zone de contact de chaque rouleau satellite 6 avec la surface intérieure 4.

Le fluide est ainsi réparti notamment sur toutes les zones de contact potentielles de chaque rouleau satellite 6 avec la vis 1 et l'écrou 3 de sorte à protéger les surfaces des rouleaux satellites 6, de la vis 1 et de l'écrou 3.

Ici, les moyens de rétention et de distribution capillaire sont associés à l'un des rouleaux satellites que l'on nommera rouleau satellite de rétention 7 par la suite.

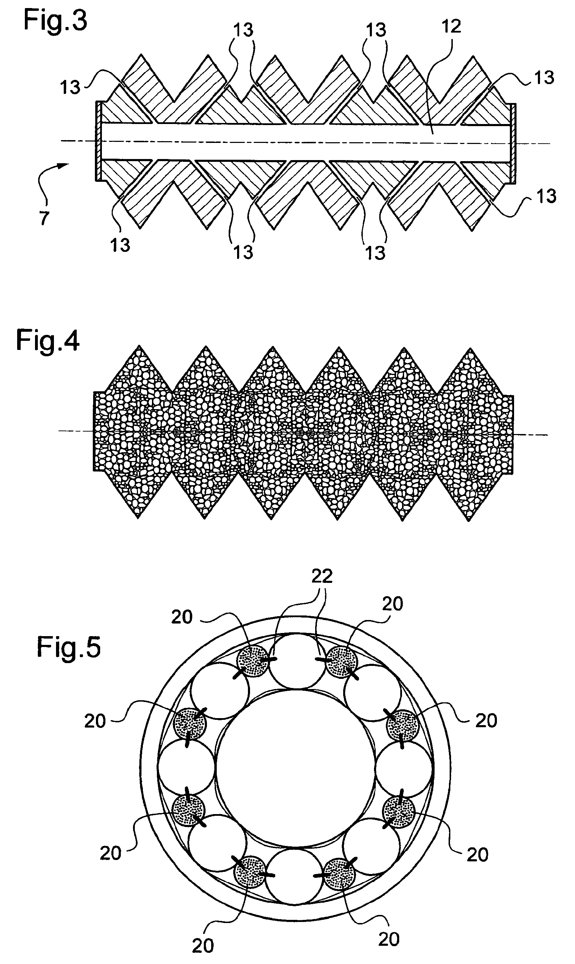

En référence à la figure 3, selon un mode de réalisation particulier, les moyens de rétention et de distribution capillaire comportent un réservoir de fluide 12 ménagé dans le rouleau satellite de rétention 7. De préférence, le réservoir 12 est formé d'une cavité cylindrique coaxiale à un axe longitudinal du rouleau satellite de rétention 7. Les moyens de rétention et de distribution capillaire comportent en outre une pluralité de canaux 13 qui sont ménagés tout au long du rouleau satellite de rétention 7 entre le réservoir 12 et chaque flanc de filet du rouleau satellite de rétention 7. Dans ce mode de réalisation, le fluide a bien entendu une viscosité et des propriétés capillaires compatibles avec les dimensions desdits canaux 13.

Selon un mode de réalisation privilégié, le fluide comporte une faible viscosité. En effet, une viscosité de faible valeur évolue peu avec la température. Ainsi, même si la vis à rouleaux satellites est soumise à des températures très basses, le fluide ne se fige pas. De façon privilégiée, le fluide comporte une viscosité comprise entre 1 et 2000 millimètres carrés par seconde à 25 degrés Celsius tout en ayant un point de solidification compris entre - 40 degrés Celsius et - 90 degrés Celsius. De façon encore plus privilégiée, le fluide comporte une viscosité comprise entre 1 et 10 millimètres carrés par seconde à 25 degrés Celsius tout en ayant un point de solidification compris entre - 60 degrés Celsius et - 85 degrés Celsius.

Bien que le film ait une faible épaisseur, il permet de limiter les contraintes thermiques au niveau des zones de contact. Selon un mode de réalisation privilégié, le fluide a en outre une conductivité thermique élevée afin d'amplifier cette limitation des contraintes thermiques.

En outre, le film doit pouvoir être pénétré ou « percé » temporairement, pour permettre un contact direct entre les rouleaux satellites 6 et la vis 1 ou l'écrou 3 sur chaque zone de contact très limitée entre un rouleau satellite 6 et la vis 1 ou entre un rouleau satellite 6 et l'écrou 3, et doit également pouvoir se reformer spontanément dès que le contact a cessé. Selon un mode de réalisation privilégié, le fluide a des propriétés capillaires dynamiques (viscosité, tension de surface...) adaptées à reformer rapidement un film homogène si le film a été temporairement percé.

Ainsi, de préférence pour répondre au critère de capillarité, le fluide est un fluide de type polaire. De façon encore plus privilégiée, le fluide est un fluide silicone.

En fonctionnement, au niveau d'une zone de contact entre l'un des rouleaux satellites 6 et par exemple la surface extérieure 2 de la vis 1, le film est percé de sorte que le rouleau satellite 6 soit directement au contact d'une portion de la surface extérieure 2. Le lubrifiant solide ainsi découvert au niveau de la zone de contact assure la lubrification. Le fluide forme autour de la zone de contact un ménisque capillaire assurant qu'en-dehors de la zone de contact l'intégrité du film est maintenue pour protéger le lubrifiant solide. Lorsque le rouleau satellite 6 se déplace relativement à la portion de la surface extérieure 2, le contact cesse au niveau de cette portion. Le film se reforme alors spontanément au niveau de ladite portion, de part les propriétés capillaires dynamique du fluide formant le film, afin de protéger de nouveau le lubrifiant solide.

Bien entendu l'invention n'est pas limitée au mode de réalisation décrit et on peut y apporter des variantes de réalisation sans sortir du cadre de l'invention tel que définie par les revendications.

En particulier, bien que l'organe mécanique décrit soit une vis à rouleaux satellites, l'organe mécanique pourra être un roulement à rouleaux satellites, un roulement à billes ou à rouleaux, une butée à aiguilles, une vis à rouleaux à recirculation, un engrenage et de façon générale tout autre organe mécanique comportant une première pièce en contact avec une deuxième pièce mobile relativement à la première pièce. Dans le cas d'un roulement à rouleaux satellites, le premier élément est une bague interne, le deuxième élément est une bague externe et les corps roulants sont des rouleaux satellites.

Bien qu'ici la vis 1, l'écrou 3 et les rouleaux satellites 6 comportent tous un revêtement de lubrifiant solide, seule la vis 1 et l'écrou 3 pourront comporter un revêtement de lubrifiant solide. En variante, seuls les rouleaux satellites 6 pourront comporter un revêtement de lubrifiant solide. Le revêtement de lubrifiant solide pourra couvrir tout ou partie de la surface extérieure 2, tout ou partie de la surface intérieure 4 ou tout ou partie des surfaces des rouleaux satellites 6 à condition de couvrir au moins les zones de contact.

Les moyens de rétention et de distribution capillaire ne sont pas nécessairement incompatibles avec un revêtement de lubrifiant solide. Cependant, de préférence, si le premier élément et le deuxième élément comportent seuls un revêtement de lubrifiant solide, les moyens de rétention et de distribution capillaire sont agencés dans au moins l'un des corps roulants. En variante, si les corps roulants comportent seuls un revêtement de lubrifiant solide, les moyens de rétention et de distribution capillaire sont agencés dans le premier élément et le deuxième élément.

Bien qu'ici le revêtement de lubrifiant solide comporte du WS₂, le revêtement de lubrifiant solide pourra comporter tout autre matériau adapté pour constituer un lubrifiant solide et par exemple du bisulfure de molybdène (ou MoS₂), du graphite... Le revêtement de lubrifiant solide pourra comprendre des particules de lubrifiant solide incorporées à la portion superficielle de la surface de la vis 1 et de l'écrou 3 et/ou des rouleaux satellites 6 de manière que l'usure de ces éléments découvre progressivement lesdites particules solides lubrifiantes.

En référence à la figure 5, bien qu'ici les moyens de rétention et de distribution capillaire aient été agencés dans un des rouleaux satellites, les moyens de rétention et de distribution pourront être agencés dans un plus grand nombre de rouleaux satellites 6 voire dans chaque rouleau satellite 6. En variante, les moyens de rétention et de distribution capillaire pourront être agencés dans des corps roulants auxiliaires 20. Chaque corps roulant auxiliaire 20 sera en contact avec au moins l'un des rouleaux satellites 6 en étant disposé radialement à celui-ci sans toutefois être au contact du premier élément et du deuxième élément. Chaque corps roulant auxiliaire 20 comportera des moyens de retenues élastiques 22 (dont seuls deux sont numérotés à la figure 5) pour être rappelé sensiblement radialement au contact du rouleau satellite 6 associé. De préférence, les corps roulants auxiliaires 20 sont répartis de façon symétrique vis-à-vis des rouleaux satellites 6. De façon privilégiée, chaque rouleau satellite 6 est associé à au moins un corps roulant auxiliaire 20.

En variante, chaque corps roulant auxiliaire 20 sera en contact simultanément avec deux rouleaux satellites 6 adjacents, en étant disposé radialement à ceux-ci. De préférence, les corps roulants auxiliaires 20 seront répartis symétriquement vis-à-vis des rouleaux satellites 6.

Les moyens de rétention et de distribution capillaire pourront être différents de ceux décrits. Par exemple, les canaux pourront être disposés dans un seul plan diamétral ou pourront être mutuellement décalés angulairement de manière à déboucher sur les flancs des filets des rouleaux satellites dans différentes directions transversales de l'axe longitudinal du rouleau satellite associé.

A la place d'un réservoir et de canaux les moyens de rétention et de distribution capillaire pourront comporter une réserve interne à au moins un des rouleaux satellites (comme représenté sur la figure 4) et/ou à au moins un corps roulant auxiliaire et formée par un ensemble de porosités du rouleau satellite et/ou du corps roulant auxiliaire. De préférence, le rouleau satellite et/ou le corps roulant auxiliaire comportera alors une couche externe d'un matériau très poreux. En variante, le rouleau satellite et/ou le corps roulant auxiliaire sera en un matériau très poreux. Dans une autre variante, les moyens de rétention et de distribution capillaire comporteront à la fois un réservoir du type de celui représenté à la figure 3 et une réserve interne permettant une distribution capillaire par couche externe poreuse. Toutefois, pour des applications où la vis à rouleaux satellites est soumise à de fortes charges axiales, il est déconseillé d'utiliser des rouleaux satellites poreux qui seraient alors trop fragiles. Il est alors possible de recourir à des corps roulants auxiliaires, ou à une sélection de rouleaux satellites de la vis à rouleaux satellites qui sont spécifiquement dimensionnés pour supporter un chargement plus faible que le reste des rouleaux satellites qui sont aptes à supporter seuls la charge mécanique.

De façon générale, il conviendra de concevoir l'organe mécanique en relation avec les applications auxquelles il est destiné notamment afin que le fluide forme toujours un film continu entre les corps roulants et chacun des deux éléments.

Par exemple, dans le cas où l'organe mécanique aura régulièrement des courses de déplacement longues, notamment maximales ou quasi maximales, les moyens de rétention et de distribution capillaire du fluide pourront être associés à un nombre moins important de corps roulants qu'à l'ensemble des corps roulants. De la même façon, le nombre de canaux 13 pourra être moins important que celui décrit. Les moyens de rétention et de distribution capillaire pourront ainsi comporter un unique canal 13 pour relier le réservoir 12 aux filets du rouleau satellite 6 associé dans le mode de réalisation illustré à la figure 3 ou un unique canal pour relier un réservoir à une paroi externe d'un corps roulant/d'un corps roulant auxiliaire.

En outre, bien qu'ici le fluide soit un fluide de type polaire et plus précisément un fluide silicone, le fluide pourra être un autre fluide. Si on s'intéresse notamment à la protection du lubrifiant solide par un fluide particulièrement peu sensible à l'environnement chimique et thermique du lubrifiant solide, l'emploi d'un fluide à base de perfluoropolyéther (PFPE) est avantageux.

Le fluide n'intervenant pas dans la lubrification de l'organe mécanique et ne travaillant pas au sens mécanique du terme, il n'est pas nécessaire de choisir le fluide en fonction des ses caractéristiques de lubrification ou de ses caractéristiques mécaniques. Comme il l'a déjà été dit, la viscosité du fluide et ses propriétés capillaires dynamiques sont des paramètres importants qui peuvent permettre de choisir un fluide adapté aux conditions d'utilisations de l'organe mécanique. La conductivité thermique du fluide peut aussi avoir son importance en fonction de l'application à laquelle on destine l'organe mécanique. Le fluide peut être également choisi principalement en fonction du lubrifiant solide ou en fonction de l'application à laquelle on destine l'organe mécanique.

## Revendications

1. Organe mécanique comportant une première pièce (6) en contact avec une deuxième pièce (1,3) mobile relativement à la première pièce, au moins l'une des pièces comportant un revêtement de lubrifiant solide au moins au niveau des zones de contact entre la première pièce et la deuxième pièce, le lubrifiant solide étant apte à assurer seul la lubrification de l'organe mécanique qui est **caractérisé en ce qu'**il comporte des moyens (13) de rétention et de distribution capillaire d'un fluide entre les pièces de manière à former un film entre lesdites pièces qui puisse être temporairement percé au niveau de chaque zone de contact.

2. Organe mécanique selon la revendication 1, comportant un premier élément (1), un deuxième élément (3) entourant coaxialement le premier élément, et une pluralité de corps roulants (6) répartis circonférentiellement entre une surface extérieure (2) du premier élément et une surface intérieure (4) du deuxième élément pour coopérer avec lesdites surfaces, au moins la surface intérieure et la surface extérieure ou au moins les corps roulants comportant un revêtement du lubrifiant solide au moins au niveau des zones de contact de chaque corps roulant avec la surface extérieure du premier élément et la surface intérieure du deuxième élément, les moyens de rétention et de distribution capillaire du fluide étant agencés de manière à former, entre les corps roulants et chaque surface, le film qui puisse être temporairement percé au niveau de chaque zone de contact de chaque corps roulant avec ladite surface, chaque corps roulant formant avec l'un des éléments la première pièce et la deuxième pièce.

3. Organe mécanique selon la revendication 1, dans lequel le fluide comporte une viscosité comprise entre 1 et 2000 millimètres carrés par seconde à 25 degrés Celsius tout en ayant un point de solidification compris entre - 40 degrés Celsius et - 90 degrés Celsius.

4. Organe mécanique selon la revendication 1, dans lequel le fluide est un fluide de type polaire.

5. Organe mécanique selon la revendication 1, dans lequel le fluide est un fluide silicone.

6. Organe mécanique selon la revendication 1, dans lequel le fluide est à base de perfluoropolyéther (PFPE).

7. Organe mécanique selon la revendication 2, dans lequel le premier élément est une vis (1), le deuxième élément est un écrou (3) et les corps roulants sont des rouleaux satellites (6).

8. Organe mécanique selon la revendication 2, dans lequel le premier élément est une bague interne, le deuxième élément est une bague externe et les corps roulants sont des rouleaux satellites.

9. Organe mécanique selon la revendication 1, dans lequel le revêtement de lubrifiant solide comporte du bisulfure de molybdène (ou MoS₂).

10. Organe mécanique selon la revendication 1, dans lequel le revêtement de lubrifiant solide comporte du bisulfure de tungstène (ou WS₂).

11. Organe mécanique selon la revendication 2, dans lequel les moyens de rétention et de distribution capillaire sont associés à tous les corps roulants (6).

12. Organe mécanique selon la revendication 2, dans lequel les moyens de rétention et de distribution capillaire comportent un réservoir de fluide (12) ménagé dans au moins un corps roulant (6), au moins un canal (13) étant ménagé dans le corps roulant entre le réservoir et une paroi externe du corps roulant, le fluide ayant une viscosité et des propriétés capillaires compatibles avec les dimensions dudit canal.

13. Organe mécanique selon la revendication 2, dans lequel les moyens de rétention et de distribution capillaire comportent une réserve interne à au moins un corps roulant (6) qui est formée par un ensemble de porosités dudit corps roulant.

14. Organe mécanique selon la revendication 2, dans lequel les moyens de rétention et de distribution capillaire sont agencés dans au moins un corps roulant auxiliaire (20) qui est en contact avec au moins l'un des corps roulants en étant disposé radialement à celui-ci sans toutefois être au contact du premier élément et du deuxième élément et qui comporte des moyens de retenue élastiques (22) pour être rappelé sensiblement radialement au contact du corps roulant associé.

## Patentansprüche

1. Mechanisches Organ, umfassend ein erstes Teil (6) in Kontakt mit einem zweiten Teil (1, 3), das relativ zum ersten Teil beweglich ist, wobei mindestens eines der Teile einen Festschmiermittelüberzug zumindest im Bereich der Kontaktzonen zwischen dem ersten Teil und dem zweiten Teil umfasst, wobei das Festschmiermittel dazu geeignet ist, alleinig die Schmierung des mechanischen Organs zu gewährleisten, das **dadurch gekennzeichnet ist, dass** es Mittel (13) zum Zurückhalten und kapillaren Verteilen eines Fluides zwischen den Teilen umfasst, derart, dass zwischen den genannten Teilen ein Film gebildet wird, der temporär im Bereich jeder Kontaktzone durchbrochen werden kann.

2. Mechanisches Organ nach Anspruch 1, umfassend ein erstes Element (1), ein zweites Element (3), welches das erste Element koaxial umgibt, und eine Vielzahl von Rollkörpern (6), die in Umfangsrichtung zwischen einer Außenfläche (2) des ersten Elements und einer Innenfläche (4) des zweiten Elements verteilt sind, um mit den genannten Flächen zusammenzuwirken, wobei mindestens die Innenfläche und die Außenfläche oder mindestens die Rollkörper einen Überzug aus Festschmiermittel zumindest im Bereich der Kontaktzonen jedes Rollkörpers mit der Außenfläche des ersten Elements und der Innenfläche des zweiten Elements umfassen, wobei die Mittel zum Zurückhalten und kapillaren Verteilen des Fluids derart ausgebildet sind, dass sie zwischen den Rollkörpern und jeder Oberfläche den Film bilden, der temporär im Bereich jeder Kontaktzone jedes Rollkörpers mit der genannten Oberfläche durchbrochen werden kann, wobei jeder Rollkörper mit einem der Elemente das erste Teil und das zweite Teil bildet.

3. Mechanisches Organ nach Anspruch 1, wobei das Fluid eine Viskosität zwischen 1 und 2000 Quadratmillimeter pro Sekunde bei 25 Grad Celsius hat, während es einen Erstarrungspunkt zwischen -40 Grad Celsius und -90 Grad Celsius hat.

4. Mechanisches Organ nach Anspruch 1, wobei das Fluid ein Fluid polarer Art ist.

5. Mechanisches Organ nach Anspruch 1, wobei das Fluid ein Silikonfluid ist.

6. Mechanisches Organ nach Anspruch 1, wobei das Fluid auf Perfluorpolyether-Basis (PFPE) ist.

7. Mechanisches Organ nach Anspruch 2, wobei das erste Element eine Schraube (1), das zweite Element eine Mutter (3) und die Rollkörper Planetenrollen (6) sind.

8. Mechanisches Organ nach Anspruch 2, wobei das erste Element ein innerer Ring, das zweite Element ein äußerer Ring und die Rollkörper Planetenrollen sind.

9. Mechanisches Organ nach Anspruch 1, wobei der Festschmiermittelüberzug Molybdändisulfid (oder MoS₂) enthält.

10. Mechanisches Organ nach Anspruch 1, wobei der Festschmiermittelüberzug Wolframdisulfid (oder WS₂) enthält.

11. Mechanisches Organ nach Anspruch 2, wobei die Mittel zum Zurückhalten und kapillaren Verteilen mit allen Rollkörpern (6) in Verbindung stehen.

12. Mechanisches Organ nach Anspruch 2, wobei die Mittel zum Zurückhalten und kapillaren Verteilen ein Fluidreservoir (12) umfassen, das in mindestens einem Rollkörper (6) ausgebildet ist, mindestens einen Kanal (13), der in dem Rollkörper zwischen dem Reservoir und einer Außenwand des Rollkörpers ausgebildet ist, wobei das Fluid eine Viskosität und kapillare Eigenschaften hat, die mit den Abmessungen des genannten Kanals kompatibel sind.

13. Mechanisches Organ nach Anspruch 2, wobei die Mittel zum Zurückhalten und kapillaren Verteilen eine Reserve im Inneren mindestens eines Rollkörpers (6) umfassen, die von einer Gesamtheit von Porositäten des genannten Rollkörpers gebildet ist.

14. Mechanisches Organ nach Anspruch 2, wobei die Mittel zum Zurückhalten und kapillaren Verteilen in mindestens einem Hilfsrollkörper (20) ausgebildet sind, der in Kontakt mit mindestens einem der Rollkörper ist, indem er radial zu demselben angeordnet ist, ohne jedoch in Kontakt mit dem ersten Element und dem zweiten Element zu sein, und der elastische Rückhaltemittel (22) umfasst, um im Wesentlichen radial in Kontakt mit dem dazugehörigen Rollkörper rückgestellt zu werden.

## Claims

1. A mechanical member comprising a first part (6) in contact with a second part (1, 3) movable relative to the first part, at least one of the parts including a coating of solid lubricant at least at contact zones between the first part and the second part, the solid lubricant being suitable on its own for lubricating the mechanical member, which member is **characterized in that** it includes retention and capillary distribution means for distributing a fluid between the parts in such a manner as to form a film between said parts, which film can be pierced temporarily at each contact zone.

2. A mechanical member according to claim 1, comprising a first element (1), a second element (3) surrounding the first element coaxially, and a plurality of rolling bodies (6) circumferentially distributed between an outside surface (2) of the first element and an inside surface (4) of the second element in order to co-operate with said surfaces, at least the inside surface and the outside surface or at least the rolling bodies including a coating of solid lubricant at least at the zones of contact between each rolling body and the outside surface of the first element and the inside surface of the second element, the retention and capillary distribution means being arranged in such a manner as to form a film between said rolling bodies and each surface, which film can be pierced temporarily at each zone of contact between each rolling body and said surface, each rolling body and one or the other of the elements then respectively constituting the first part and the second part.

3. A mechanical member according to claim 1, wherein the fluid has viscosity lying in the range 1 square millimeters per second to 2000 square millimeters per second at 25 Celsius degrees, while having a freezing point lying in the range -40 Celsius degrees to -90 Celsius degrees.

4. A mechanical member according to claim 1, wherein the fluid is a polar type fluid.

5. A mechanical member according to claim 1, wherein the fluid is a silicone fluid.

6. A mechanical member according to claim 1, wherein the fluid is based on perfluoropolyether (PFPE).

7. A mechanical member according to claim 2, wherein the first element is a screw (1), the second element is a nut (3), and the rolling bodies are planetary rollers (6).

8. A mechanical member according to claim 2, wherein the first element is an inner ring, the second element is an outer ring, and the rolling bodies are planetary rollers.

9. A mechanical member according to claim 1, wherein the coating of solid lubricant comprises molybdenum bisulfide (MoS₂).

10. A mechanical member according to claim 1, wherein the coating of solid lubricant comprises tungsten bisulfide (WS₂).

11. A mechanical member according to claim 2, wherein the retention and capillary distribution means are associated with all of the rolling bodies (6).

12. A mechanical member according to claim 2, wherein the retention and capillary distribution means comprise a fluid tank (12) arranged in one of the rolling bodies (6), at least one channel (13) being provided in the rolling body between the tank and an outer wall of the rolling body, the fluid having viscosity and capillary properties compatible with the dimensions of said channel.

13. A mechanical member according to claim 2, wherein the retention and capillary distribution means comprise an internal supply in at least one of the rolling bodies (6), which supply is formed by a set of pores in said rolling body.

14. A mechanical member according to claim 2, wherein the retention and capillary distribution means are arranged in at least one axially rolling body (20) that is in contact with at least one of the rolling bodies by being arranged radially relative thereto but without coming into contact with the first element or the second element, and that includes resilient retention means (22) to urge it substantially radially into contact with the associated rolling body.
